# EUROPÄISCHE PATENTSCHRIFT

(11) **EP 0 571 871 B1**
(45) Veröffentlichungstag und Bekanntmachung des Hinweises auf die Patenterteilung: **09.10.1996**
(21) Anmeldenummer: 93108053.5
(22) Anmeldetag: 18.05.1993
(51) Int. Cl.: B01D 71/68, B01D 69/02, B01D 67/00

(54) **Verfahren zu Herstellung einer hydrophilen Membran**
Method for preparing a hydrophilic membrane
Procédé de fabrication d'une membrame hydrophile

(30) Priorität: 26.05.1992 DE 4217335
(43) Veröffentlichungstag der Anmeldung: 01.12.1993
(73) Patentinhaber: SEITZ-FILTER-WERKE Gmbh und Co., D-55543 Bad Kreuznach (DE)
(72) Erfinder: Müller, Hans-Joachim, Dr., W-6550 Bad Kreuznach (DE); Renner, Tilo, W-6551 Mandel (DE); Kuchar, Anneliese, W-6531 Hergenfeld (DE)
(74) Vertreter: Fuchs, Luderschmidt & Partner Patentanwälte

(56) Entgegenhaltungen:
- EP-A- 0 082 433
- EP-A- 0 550 798
- DE-A- 4 007 383
- US-A- 4 413 074
- PATENT ABSTRACTS OF JAPAN vol. 12, no. 338 (C-527)12. September 1988 & JP-A-63 097 205 (TORAY IND INC) 27. April 1988
- PATENT ABSTRACTS OF JAPAN vol. 11, no. 222 (C-435)18. Juli 1987 & JP-A-62 038 205 (DAICEL CHEM IND LTD) 19. Februar 1987
- PATENT ABSTRACTS OF JAPAN vol. 13, no. 101 (C-574)9. März 1989 & JP-A-63 277 251 (FUJI PHOTO FILM CO LTD) 15. November 1988

## Beschreibung

Die Erfindung bezieht sich auf die Herstellung einer permament hydrophilen Filtermembran auf Basis von aromatischem Polysulfon.

Membranen aus synthetischem Polymer, insbesondere mikroporöse Membranen, sind seit langem bekannt und werden vorzugsweise zur Filtration von Flüssigkeiten und Gasen verwendet, wie z.B. in "Kesting, R.E.: Synthetic Polymaric Membranes, McGraw Hill Book Co., New York, 1971" berichtet wird. Als polymere Materialien werden z.B. Polyolefine, Polyamide und aromatische Polysulfone eingesetzt.

Ein Großteil solcher Membranen findet bei der Filtration von wässrigen Lösungen, wie z.B. bei der Herstellung von Getränken und Pharmazeutika oder bei der Aufbereitung von Prozeßwässern Anwendung. Daher müssen solche Membranen vorteilhafterweise hydrophil sein, das heißt im trockenen Zustand spontan und vollständig mit Wasser benetzbar sein, um das wässrige Medium durch die Membran überhaupt filtrieren zu können.

In der Praxis stellt sich die Anforderung an eine vollständige Benetzbarkeit solcher Membranen besonders, weil zum einen die obligatorische Prüfung der Membranen auf ihre Tauglichkeit in situ erfolgen sollte und zum anderen, weil es insbesondere in der pharmazeutischen und Lebensmittelindustrie oft geboten erscheint, die Membranen vor ihrer Anwendung sterilisieren zu müssen, um während dieser Anwendung das Durchwachsen von Keimen durch die Membran zu verhindern. Eine solche Sterilisation geschieht üblicherweise durch Beaufschlagung der Membranen bzw. der Filtermodule mit strömendem Dampf. Während in der Getränkeindustrie die dafür üblichen Bedingungen bei einem Dampfdruck von 1 bar (entsprechend 121°C) stattfinden, wird in der pharmazeutischen Industrie bei 2 bar Dampfdruck (entsprechend 134°C) sterilisiert. Den dabei zu stellenden hohen Anforderungen an thermische und chemische Belastung halten die meisten Membranen nach dem Stand der Technik nicht stand, da an sich aus hydrophilem Polymermaterial aufgebaute Membranen gegenüber Oxidationsmitteln instabil sind, hydrophilierte, aus an sich hydrophobem Rohstoff bestehende Membranen, insbesondere bei zusätzlicher Zugabe von Tensiden oder ähnlichem, ihre Hydrophilie aber während der Wasserdampfdestillation mehr oder weniger schnell verlieren.

Aus der EP 005 536 sind aus hydrophilen Polyamiden aufgebaute Membranen bekannt, die an und für sich eine gute Benetzbarkeit durch Wasser zeigen. Ihre hohe Empfindlichkeit gegenüber Oxidationsmitteln wie z.B. Hypochloritlösung sowie gegenüber stark akalischen oder sauren Lösungen, schränkt ihre Verwendbarkeit in den oben beschriebenen Anwendungsgebieten stark ein.

Aus der EP 0 108 601 sind Membranen aus hydrophobem Polypropylen bekannt, die jedoch vor ihrer Prüfung auf Tauglichkeit und vor ihrem Einsatz unter erheblichem Aufwand zuvor hydrophiliert werden müssen.

Membranen aus aromatischem Polysulfon erweisen sich Oxidationsmitteln gegenüber als außerordentlich stabil. Sie sind aber normalerweise nicht hydrophil. Allerdings sind auch eine Reihe von Membranen auf Polysulfonbasis bekannt, die unter Normalbedingungen mit Wasser benetzbar sind. In der EP 0 082 433 wird die Herstellung solcher hydrophilierter Membranen aus aromatischem Polysulfon beschrieben. Durch Koagulieren der Polymerlösung in einem Wasserbad werden die Membranen nach dem sogenannten Fällbadverfahren hergestellt und sollen nach Angabe des Erfinders "verfestigtes" Polyvinylpyrrolidon enthalten. Die so hergestellten Membranen werden als hydrophil bezeichnet, wobei die Hydrophilie durch eine Wasseraufnahme der Membranen von >11 % gekennzeichnet sein soll.

Die Hydrophilie der Membran von an sich hydrophobem Polysulfonmatrixmaterial wird in der EP 0 082 433 durch Beimengung von 15 - 70 % Polyvinylpyrrolidon (PVP) bewirkt. Solche Membranen sind nach ihrer Herstellung zwar hydrophil, verlieren aber nach mehrmaligem Dampfdestillisieren bei in der pharmazeutischen Industrie obligatorischen 2 bar Dampfdruck (entsprechend 134°C) von Mal zu Mal zunehmend ihre Fähigkeit, mit Wasser benetzbar zu sein.

In der DE-PS 40 00 825 wird ein ähnliches Verfahren beschrieben. Im Gegensatz zur EP 0 082 433 wird typischerweise nur etwa 0,5 % Polyvinylpyrrolidon, bezogen auf das Polymer, zugesetzt. Die Membran wird aus der Polysulfonlösung durch Einwirken von Luftfeuchtigkeit gebildet. In beiden Patenten wird die Vernetzung von PVP erwähnt, wobei jedoch die chemische Vernetzung insbesondere durch Zugabe von Natronlauge bewirkt wird. In der DE-A-4 007 383 wird zur Hydrophilierung PVP mit einem Molekulargewicht über 90 000 zwischen 0,1 und 2 Gew.-% eingesetzt und die gebildete Membran sodann in ein Alkalibad eingetaucht. Diesen Patenten ist aber gemeinsam, daß ihre Membranen nach mehrmaliger Wasserdampfsterilisation bei 2 bar nicht mehr ausreichend mit Wasser benetzbar sind. Ebenso sind die Membranen nach Extraktion mit siedendem Alkohol und anschließendem Trocknen nicht mehr mit Wasser benetzbar.

In der EP 02 28 072 werden Membranen beschrieben, die aus einem Gemisch eines wasserlöslichen Polymeren wie PVP oder Polyethylenglykol und einem membranbildenden Polymeren bestehen, wobei letzteres dadurch charakterisiert ist, daß es in unverarbeiteter Form 2 - 4 % Wasser aufnimmt. In dieser Schrift wird ausdrücklich zwischen den verschiedenen Typen aromatischer Polysulfone unterschieden und darauf hingewiesen, daß nur Polymere mit 2 - 4 % Wasseraufnahme, also von aromatischen Polysulfonen ausschließlich nur Polyethersulfon und nicht Polysulfon, das eine geringere Wasseraufnahme besitzt, zur Herstellung hydrophiler Membranen geeignet sind.

Membranen auf Basis aromatischer Sulfone stellen wegen ihrer äußerst vorteilhaften thermischen und chemischen Widerstandsfähigkeit, nicht zuletzt auch wegen ihrer Unbedenklichkeit beim Kontakt mit Lebensmitteln, in Prozessen der pharmazeutischen und Lebensmittelindustrie ein äußerst wünschenswertes Material dar. Da sie aber hydrophob sind (insbesondere Polysulfon und Polyarylsulfone mit einer Wasseraufnahmefähigkeit von unter 2 %) müßten sie vor ihrem Einsatz hydrophiliert werden. Die oben beschriebenen Hydrophilierungsmethoden, insbesondere für Polysulfone und Polyarylsulfone, reichten aber nicht aus, um die Hydrophilie der Membran auch nach mehrfacher, für eine Sterilisation erforderlichen Wasserdampfsterilisation bzw. Alkoholextraktion aufrecht zu erhalten. Für eine einfache Anwendung, z.B. bei Sterilfiltration wässriger Medien, ist entscheidend, daß die Membranen ohne großen Aufwand auf ihre Funktionsfähigkeit überprüft werden können, das heißt, die Membranen sollten in ihren Filterhaltern bzw. ihrem Filtermodul ohne Ausbau derselben aus der Filteranlage getestet werden können. Dies ist bei mehrmaliger Verwendung nur möglich, wenn die Membrane auch nach mehrmaliger Sterilisation vollständig wasserbenetzbar bleiben. Ein Membranfilter, das auch nur eine hydrophobe Stelle besitzt, besteht wegen des Durchganges des Testgases durch diese hydrophobe Stelle die Prüfung nicht und muß aus Sicherheitsgründen verworfen werden, obwohl die Membran eigentlich noch intakt gewesen wäre.

Eine mehr oder weniger dauerhafte Hydrophilierung kann prinzipiell auf zwei unterschiedliche Arten erfolgen. Zum einen kann eine hydrophile, wasserlösliche Polymerkomponente zum hydrophoben Matrixmaterial zugesetzt sein und vor dem Auswaschen mit Wasser durch Quervernetzung wasserunlöslich gemacht werden, wobei es aber seine hydrophilen Eigenschaften beibehält und so das Membranmatrixmaterial insgesamt hydrophiler macht; zum anderen kann auf die Oberfläche der fertig ausgebildeten hydrophoben Polymermatrix nachträglich eine Schicht aus hydrophilem Polymermaterial festhaftend aufgebracht werden.

In der JP-A-63097205 wird das zum hydrophoben Polysulfon zugesetzte hydrophile Polyvinylpyrrolidon vor dem Auswaschen aus der gebildeten Membran in der Hitze bei 170°C über einen Zeitraum von 10 Stunden oder mittels Bestrahlung quervernetzt und somit wasserunlöslich gemacht. In der nachveröffentlichten aber älteren Anmeldung EP-A-0 550 798 erfolgte die Quervernetzung des Polyvinylpyrrolidons mittels ionisierender Strahlen.

In der JP-A-62038205 findet die Quervernetzung des Polyvinylpyrrolidons in asymmetrischen Membranen nur in der Trennschicht mittels Eintauchen in eine Ammoniumperoxodisulfatlösung statt.

Derartig hydrophilierte Membranen weisen eine permanente Hydrophilie auf. Da aber das in der Polymerlösung gelöste Polyvinylpyrrolidon wegen seiner Wasserlöslichkeit beim Fällen des hydrophoben Polymers auch Einfluß auf die Porenbildung ausübt, wird dies bei der Quervernetzung des Polyvinylpyrrolidons zu großen Teilen verhindert, so daß eine Beeinflussung der Membranmorphologie stattfindet.

Zum anderen kann nachträglich auf die Oberfläche einer fertig ausgebildeten hydrophoben Membranmatrix lediglich eine dünne Hydrophilierungsschicht aufgebracht werden.

Ein solches Verfahren wird in der JP-A-63277251 beschrieben, wo die fertig ausgebildete mehr oder weniger hydrophobe Polysulfonmembran in ein Bad mit Tensiden, wie etoxylierten Sorbitanestern oder Alkylphenolethoxylaten eingetaucht, und der Tersidüberzug sodann mittels hochfrequenter Mikrowellen getrocknet wird.

In einem anderen, in US-A-413,074 beschriebenen Verfahren wird die hydrophobe Polysulfonoberfläche einer fertig ausgebildeten Membran mit einer Lösung von Hydroxyalkylcellulose in Gegenwart eines Tensids auf Basis von Perfluorkohlenwasserstoffen in Kontakt gebracht und die benetzte Membran sodann auf 110 bis 190°C erhitzt, wodurch sich eine permanent hydrophile Schicht aus quervernetzter, hydrophiler Hydroxyalkylcellulose auf der hydrophoben Polymermatrix ausbildet.

Der Erfindung liegt daher die Aufgabe zugrunde, ein Verfahren zur Verfügung zu stellen, mit welchem aus der thermisch und chemisch widerstandsfähigen Kunststoffklasse der aromatischen Polysulfone Membranen hergestellt werden können, welche zur Sterilfiltration von wässrigen Lösungen einsetzbar sind und auch nach mehrmaliger Wasserdampfdestillation permanent hydrophil bleiben und damit ohne zusätzlichen Aufwand getestet werden können. Die Hydrophilie soll dabei mittels einer auf der Polymermatrixoberfläche befindlichen Schicht vermittelt werden.

Die Aufgabe wird so gelöst, daß nach an sich bekannten Verfahren hergestellte Membranen vor oder nach dem Trocknen durch ein Imprägnierbad geleitet werden, welches als wässrige Lösung enthält:
- 0,01 - 2 Gew.-% Polyvinylpyrrolidon und 0,01 - 2 Gew.-% eines Copolymers, bestehend aus 5 - 80 % Monomeranteilen aus Vinylpyrrolydon und insgesamt 95 - 20 % Monomeranteilen eines oder mehrerer hydrophober Monomere,
- Peroxodisulfat in der 0,1 - 10-fachen gewichtsprozentualen Menge des eingesetzten Gesamtgewichts aus PVP und Polymer, und
- einen Alkohol mit 1 bis 4 C-Atomen in solcher Menge, daß eine Trübung der wässrigen Lösung gerade vermieden wird, und die so imprägnierte Membran über einen Zeitraum von 1 - 60 Minuten auf eine Temperatur von 70 - 150°C erhitzt und anschließend auf Raumtemperatur abkühlen gelassen wird.

Die so erhaltenen Membranen sind auch nach mehrmaliger Wasserdampfsterilisation bzw. Extraktion mit siedendem Alkohol ohne Benetzungshilfsmittel spontan wasserbenetzbar und können somit in ihrer Filterhalterung bzw. in ihrem Filtermodul geprüft werden.

Das aromatische Polysulfon wird in an sich bekannter Weise in einem geeigneten Lösungsmittel gelöst. Als solches kommen unter anderem in Frage:
Dimethylsulfoxid, Dimethylformamid, Dimethylacetamid und N-Methylpyrrolidon. Übicherweise sind die Polymerlösungen zusätzlich noch mit einem weiteren Stoff, dem sogenannten Nichtlöser vermischt. Es ist auch möglich, mehrere Nichtlöser zu verwenden. Der Nichtlöser hat die Aufgabe, die Polymerlösung so nahe an den Fällpunkt des Polymeren zu bringen, daß bei der Membranausbildung schon geringe Mengen eines weiteren oder des gleichen Nichtlösers zur Membranausformung beitragen. Als Nichtlöser können eine ganze Reihe verschiedener Stoffe Verwendung finden. Im allgemeinen werden wasserlösliche Nichtlöser bevorzugt, da dann die fertige Membran ohne großen Aufwand mit Wasser ausgewaschen werden kann.

Geeignete Nichtlöser sind unter anderem:
Polyethylenglykol, Ethylenglykol, Glycerin, Wasser, Propylencarbonat, Ethylencarbonat, Butyrolacton.

Als weitere Komponente kann z.B. Polyvinylpyrrolidon (PVP) eingesetzt werden, um die Viskosität der Polymerlösung in gewünschter Weise zu verändern. Durch weitere Additive wie z.B. Nucleierungsmittel, Tenside, oder leicht flüchtige Löser oder Nichtlöser kann die Membranstruktur in gewünschter Weise beeinflußt werden.

Die so hergestellte Polymerlösung wird als dünner Film auf eine Unterlage gegossen und dann durch Einwirken von feuchter Luft oder durch Eintauchen des Films in ein Nichtlöserbad verfestigt.

Als Unterlage für solche Flachmembranen kann auch ein Vlies oder ein anderes Trägermaterial zur Verstärkung dienen.

Die Membran kann auch als Kapillarmembran ausgebildet werden, indem die Polymerlösung durch eine Ringspaltdüse extrudiert wird. Im Inneren der Düse wird gleichzeitig eine Innenflüssigkeit aus einem geeigneten Löser/Nichtlöser-Gemisch eingespeist, um so den inneren Raum der Kapillarmembran auszubilden. Die so geformte fadenförmige Lösung wird durch Eintauchen in ein geeignetes Fällbad verfestigt.

Nach der Verfestigung wird die Flach- oder Kapillarmembran in Wasser zwischen 10 und 100°C ausgewaschen, um Lösungsmittel und Nichtlöser aus der Membran zu entfernen. Die ausgewaschene Membran wird anschließend getrocknet, um so die anwendungsreife Membran zu erhalten. Der entscheidende Schritt der Erfindung kann nun vor oder nach dem Trocknen durchgeführt werden.

Dazu wird die fertige Membran im nassen oder trockenen Zustand durch ein Imprägnierbad geleitet, welches 0,01 - 2 Gew.-% Polyvinylpyrrolidon und 0,01 - 2 Gew.-% Polyvinylpyrrolidon-Copolymere in Wässriger Lösung enthält. Für eine Imprägnierung von noch nassen Membranen reicht ein Zeitintervall von mindestens 5 bis ca. 60 Sekunden aus. Für zuvor getrocknete Membranen benötigt man einen Zeitraum von mindestens 2 bis 10 Sekunden. Die Copolymere sind dadurch gekennzeichnet, daß sie aus 5 - 80 % Monomeranteilen aus Vinylpyrrolidon und insgesamt entsprechend 95 - 20 % Monomeranteilen eines oder mehrerer hydrophober Monomere hergestellt werden. Statt eines einzelnen hydrophoben Monomeren sind auch Gemische verschiedener Monomere denkbar, wobei entscheidend ist, daß ein wesentlicher Anteil dieser Monomere hydrophob ist.

Zusätzlich erhält die Imprägnierlösung noch Peroxodisulfat, bevorzugt in Form des Natrium-, Kalium- oder Ammoniumsalzes. Der Anteil des Peroxodisulfats liegt zwischen 0,1 bis zum zehnfachen der eingesetzten Polymere (PVP plus Copolymer zusammen) vorzugsweise zwischen dem 0,2 bis dreifachen. Als Hilfslösungsmittel wird zusätzlich zum Wasser ein Alkohol verwendet, von dem so viel der Lösung zugegeben wird, daß die Polymere ohne wesentliche Trübung löslich sind.

Die so imprägnierte Membran wird anschließend auf 70 - 150°C, vorzugsweise 80 - 110°C über einen Zeitraum von 1 - 60 Minuten, vorzugsweise 2 - 10 Minuten, erhitzt. Durch diese Erhitzung erfolgt eine drastische Verbesserung der nach Dampfsterilisation noch vorhandenen hydrophilen Eigenschaften der Membranen.

Unter dem als Matrix-Polymer verwendeten aromatischen Polysulfon wird ein Polymer verstanden, daß als Struktureinheit mindestens die Sulfongruppe (-SO₂-) und den aromatischen Benzolring mit mindestens zwei Valenzen enthält. Die Food & Drug Administration, USA, unterscheidet dabei zwischen Polysulfon, Polyethersulfon und Polyarylsulfon (21 CFR Ch.I (4-1-89 Edition), § 177.1560 - § 177.2450). Diese Polymere sind ihrer Struktur nach folgendermaßen gekennzeichnet:
Polysulfon 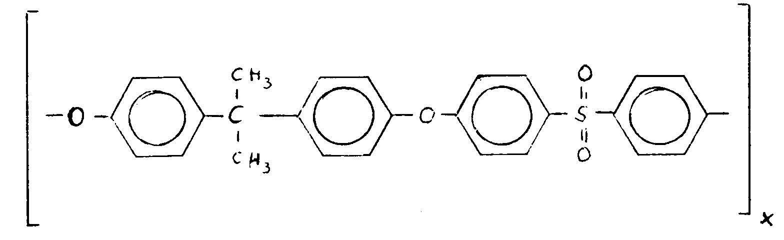 Polyethersulfon 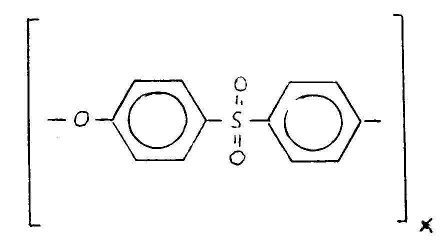 Polyarylsulfon Copolymer aus: 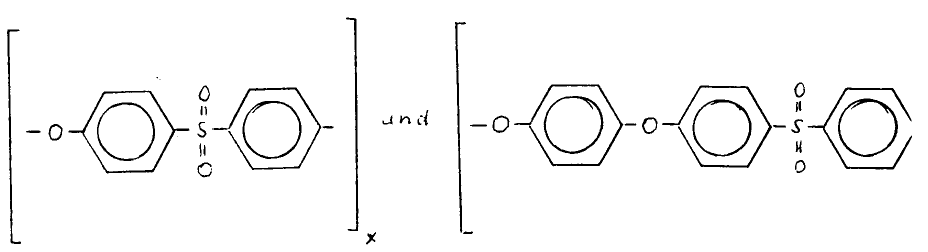 Polysulfon unterscheidet sich von den beiden anderen erwähnten Verbindungen durch die Struktureinheit 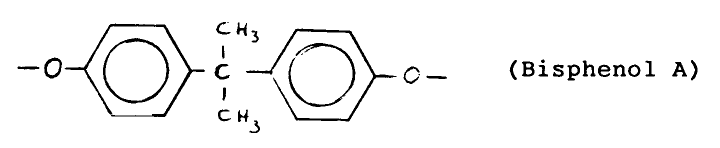 welche durch ihren ausgeprägten hydrophoben Charakter für die geringe Hydrophilie dieses Polymers verantwortlich ist. Die beiden anderen Polymere, insbesonders Polyethersulfon, weisen eine höhere Wasseraufnahme auf. Polyethersulfon hat gemäß EP 0 228 072 eine Wasseraufnahme von 2,5 %. Neben diesen handelsüblichen Typen aromatischer Polysulfone ist noch eine Reihe anderer Polysulfone ähnlicher Struktur möglich, wobei insbesondere auf aromatische Polysulfone mit der Struktureinheit Bisphenyl hingewiesen wird, die üblicherweise als Polyphenylsulfon bezeichnet werden. Mit dem erfindungsgemäßen Verfahren können jedoch alle aromatischen Polysulfone permanent hydrophiliert werden.

Der Zusatz eines oder mehrerer hydrophober Monomere zur Ausbildung des Copolymeren im Imprägnierbad ist essentiell. Vinylpyrrolidon allein vermittelte keine anhaltende Hydrophilie bei Behandlung der Membranen mit Wasserdampf. Das resultierende Polymer würde also keine permanente Hydrophilie gewährleisten.

Selbstverständlich ist nach dem erfindungsgemäßen Verfahren die Hydrophilierung nicht allein auf Membranen für Mikrofiltration beschränkt; auch solche Membranen mit charakteristischen Porengrößen für Ultrafiltration und Umkehrosmose auf Basis aromatischer Polysulfone können nach dem erfindungsgemäßen Verfahren permanent hydrophiliert werden.

Die Erfindung wird im folgenden anhand typischer Beispiele näher erläutert:

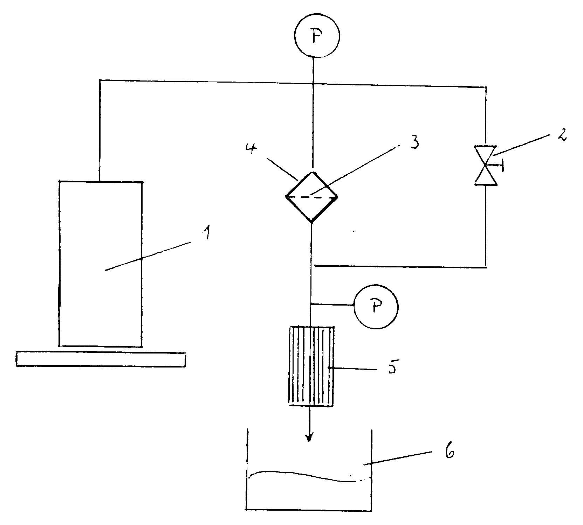

Um eine praxisrelevante Dampfbehandlung der Membran im Labor zur simulieren, wurde ein Versuchsaufbau gewählt, wie er in der Figur dargestellt ist.

Der Dampferzeuger 1 wird auf einen Dampfdruck von 2 bar (entsprechend 134°C) eingestellt. Der Differenzdruckregler 2 stellt sicher, daß der Differenzdruck an der Membran 3 im Bereich 0,1 - 0,3 bar gehalten wird, um ein Durchströmen durch die Membran zu gewährleisten, aber die Membran vor Schaden durch zu hohen Differenzdruck zu bewahren. Das Kondensat wird in einem Kondensatabscheider 5 niedergeschlagen und in einem Behälter 6 gesammelt.

### TEST AUF WASSERBENETZBARKEIT

Aus einer trockenen Testmembran wird ein Stück (50 mm Durchmesser) ausgestanzt und auf Wasser von 20° C gelegt. Nach einer Minute wird visuell überprüft, ob die Membran fleckenfrei von Wasser benetzt wurde. Eine Membran wird dann als spontan wasserbenetzbar bezeichnet, wenn sie praktisch fleckenfrei mit Wasser benetzt ist. Dies gilt für alle Membranen mit Porendurchmessern im Mikrofiltrationsbereich von 0,01 - 5 µm.

### TEST AUF HYDROPHILIE

Die trockene Membran wird in einen Filterhalter eingespannt, mit Wasser von 20° C beschichtet (Höhe ca. 5 - 10 mm) und von unten mit Luftdruck beaufschlagt (= Blaspunktmessung). Nach Messung des Blaspunktes wird die Membran in einem anderen Filterhalter mit Ethanol benetzt und mit 10 ml Wasser pro cm² Membran ausgespült. Danach wird wieder der Blaspunkt, jedoch mit der nassen Membran, gemessen.

Bewertung: Wenn der Blaspunkt der ersten Messung mindestens 80 % der zweiten Messung beträgt, wird die Membran als hydrophil, ansonsten als hydrophob bezeichnet.

### Beispiel 1 (Vergleichsbeispiel)

In einer Mischung von 100 g N-Methylpyrrolidon und 190 g Polyethylenglykol (Pluriol® 400) werden 30 g Polysulfon P1800® unter Rühren und gelindem Erwärmen gelöst. Zu dieser Mischung werden 0,6 g Polyvinylpyrrolidon (Kollidon® K90) zugesetzt und ebenfalls unter Rühren aufgelöst. Die entstandene viskose Lösung wird als Film von 0,3 mm Dicke auf eine Glasplatte ausgestrichen und an der Luft stehen gelassen. Während des Stehens nimmt die hygroskopische Lösung aus der Luft Feuchtigkeit auf. Dadurch wird das Polysulfon ausgefällt und nachdem sich die so entstandene Membran genügend verfestigt hat, wird sie nach Auswaschen mit Wasser getrocknet. Das so hergestellte Membranmaterial ist teilweise hydrophil.

Nach dem Auswaschen der Lösungsmittel mit Hilfe von Wasser kann durch einen weiteren Verfahrensschritt das in der Membran noch vorhandene, eventuell noch auswaschbare Polyvinylpyrrolidon unlöslich gemacht werden. Dazu wird die ausgewaschene Membran in eine heiße 10 prozentige Natronlauge über einen Zeitraum von etwa 1 Minute eingelegt. Anschließend wird die Natronlauge mit Hilfe von Wasser ausgewaschen. Die so erhaltene Membran benetzt nach dem Trocknen spontan mit Wasser.
a) Ein Teil der Membran wird über einen Zeitraum von 2 Stunden in einem Soxhlet-Extraktor mit siedendem Ethanol extrahiert. Die Membran ist nach dem Trocknen vollständig hydrophob.
b) Ein anderer Teil der Membran wird eine halbe Stunde mit Dampf bei 134°C durchströmt. Nach dem Trocknen ist die Membran vollständig hydrophob.

### Beispiel 2

In einer Mischung von 100 g N-Methylpyrrolidon und 190 g Polyethylenglykol (Pluriol® 400) werden 30 g Polysulfon P1800 unter Rühren und gelindem Erwärmen gelöst. Zu dieser Mischung werden 0,6 g Polyvinylpyrrolidon (Kollidon® K90) zugegeben und ebenfalls unter Rühren aufgelöst. Die entstandene viskose Lösung wird als Film von 0,3 mm Dicke auf eine Glasplatte ausgestrichen und an der Luft stehen gelassen. Während des Stehens nimmt die hygroskopische Lösung aus der Luft Feuchtigkeit auf. Dadurch wird das Polysulfon ausgefällt. Nachdem sich die so entstandene Membran genügend verfestigt hat, wird sie mit Wasser ausgewaschen und anschließend getrocknet.

Die so getrocknete Membran wird anschließend in eine Lösung aus 0,3 % PVP K90, 0,3 % Copolymer VP/VA 1:1 und 0,5 % Natriumperoxodisulfat in Wasser/Ethanol 4:1 getaucht, nach 5 Sekunden herausgenommen, mit Papier abgetupft und auf einem Walzentrockner bei einer Temperatur von 90°C getrocknet.
a) Ein Teil dieser Membran wird mit Ethanol in einem Soxhlet-Extraktor über einen Zeitraum von 2 Stunden extrahiert. Die Membran benetzt nach dem Trocknen vollständig und spontan mit Wasser.
b) Ein anderer Teil der Membran wird dreimal je eine halbe Stunde lang mit Wasserdampf bei einer Temperatur von 134°C durchströmt. Nach dem Trocknen wird die Membran wieder vollständig mit Wasser benetzt.

### Beispiel 3 (Vergleichsbeispiel)

11 Gewichtsteile Polyphenylsulfon (Radel® R5000, Firma Amoco) wurden unter Rühren bei 80°C in 34,8 Gewichtsteilen NMP (N-Methylpyrrolidon) aufgelöst. Die homogene Lösung wird sodann auf 30°C abgekühlt und unter intensivem Rühren ein Gemisch aus 52,2 Gewichtsteilen PEG 400 und 3 Gewichtsteilen Glycerin langsam zugegeben. Es wird 3 Stunden bis zur Homogenität der Lösung weiter gerührt und sodann durch Stehenlassen der Lösung im verschlossenen Gefäß über einen Zeitraum von 15 Stunden die Lösung entgast.

Die entgaste Lösung wird mit Hilfe eines Rakels auf einer Glasplatte zu einem Film mit 260 µm Dicke ausgegossen. Der Lösungsfilm wird mit Luft bei 25°C, 95 % relativer Luftfeuchtigkeit und 0,2 m/s Luftgeschwindigkeit überstrichen. Durch Aufnahme von Wasser aus der Luft wird das Polymer ausgefällt.

Nach Verfestigung des Polymers wird die enthaltene Membran nach einer halben Stunde von der Glasplatte genommen und in Wasser bei einer Temperatur von 80°C über einen Zeitraum von 2 Stunden ausgewaschen. Anschließend wird die Membran herausgenommen und auf einem Walzentrockner bei 90°C getrocknet.

Die erhaltene Membran hat folgende Kenndaten:
- Dicke:: 150 µm
- Blaspunkt in Wasser:: 1,7 bar
- Wasserdurchfluß:: 48 ml/(cm²min bar)

Die Membran ist mit Wasser benetzbar.
a) Die so erhaltene Membran wird in einem Soxhlet-Extraktor über einen Zeitraum von 2 Stunden in siedendem Ethanol extrahiert. Nachdem die Membran getrocknet war, benetzte sie nicht mehr mit Wasser.
b) Ein anderer Teil der Membran wurde dreimal über einen Zeitraum von einer halben Stunde bei jeweils 134°C mit Wasserdampf durchströmt. Nach dem Trocknen war die Membran hydrophob.

### Beispiel 4

Eine gemäß Beispiel 3 hergestellte Membran wurde in nassem Zustand in ein Imprägnierbad aus 0,22 % PVP K120 und 0,2 % VP/VA Copolymer 1:1 und 0,5 % Kaliumperoxodisulfat in Ethanol/Wasser 1:4 getaucht und nach 10 Minuten herausgenommen. Die Membran wurde sodann auf einem Walzentrockner bei 95°C getrocknet.

Die so erhaltene Membran wies folgende Kenndaten auf:
- Blaspunkt in Wasser:: 1,7 bar
- Wasserdurchfluß:: 44 ml/(cm²min bar)

Die Membran war spontan mit Wasser benetztbar.
a) Die Membran wurde in einem Soxhlet-Extraktor über einen Zeitraum von 2 Stunden in siedendem Ethanol extrahiert. Nachdem die Membran getrocknet war, konnte sie mit Wasser benetzt werden.
b) Ein anderer Teil der Membran wurde fünfmal über einen Zeitraum von je einer halben Stunde bei einer Temperatur von 134°C mit Wasserdampf durchströmt. Nach dem Trocknen war die Membran hydrophil.

## Patentansprüche

1. Verfahren zur Herstellung einer permanent hydrophilen Filtermembran auf Basis von aromatischem Polysulfon, wobei das die Membran aufbauende aromatische Polysulfon nach an sich bekannten Verfahren in einem geeigneten Lösungsmittel gelöst und anschließend durch Koagulation der Polymerlösung in einem geeigneten Fällbad als Flach- oder Kapillarmembran mit gewünschter Morphologie ausgebildet wird,
wobei die so erhaltene Membran vor oder nach dem Trocknen durch ein Imprägnierbad geleitet wird, welches als wässrige Lösung enthält:
- 0,01 - 2 Gew.-% Polyvinylpyrrolidon und
0,01 - 2 Gew.-% eines Copolymers, bestehend aus
5 - 80 % Monomeranteilen aus Vinylpyrrolidon und
95 - 20 % Monomeranteilen eines oder mehrerer hydrophober Monomere,
- Peroxodisulfat in der 0,1 - 10-fachen gewichtsprozentualen Menge des eingesetzten Gewichts an PVP und Copolymer, und
- einen Alkohol mit 1 bis 4 C-Atomen in solcher Menge, daß eine Trübung der wässrigen Lösung gerade vermieden wird,
und daß die so imprägnierte Membran über einen Zeitraum von 1 - 60 Minuten auf eine Temperatur von 70 - 150°C erhitzt und anschließend auf Raumtemperatur abgekühlt wird.

2. Verfahren nach Anspruch 1, wobei die Membran vor dem Trocknen über einen Zeitraum von 5-60 Sekunden durch das Imprägnierbad geleitet wird.

3. Verfahren nach Anspruch 1, wobei die Membran nach dem Trocknen über einen Zeitraum von 2-10 Sekunden durch das Imprägnierbad geleitet wird.

4. Verfahren nach jedem der Ansprüche 1-3, wobei als hydrophobes Monomer Vinylacetat eingesetzt wird.

5. Verfahren nach jedem der Ansprüche 1-4, wobei das Peroxodisulfat in Form seines Na- und/oder K- und/oder NH₄-Salzes zugesetzt wird.

6. Verfahren nach jedem der Ansprüche 1-5, wobei das Peroxodisulfat in der 0,2 - 3-fachen Menge des eingesetzten Gesamtgewichts von PVP und Copolymer zugesetzt wird.

7. Verfahren nach jedem der Ansprüche 1-6, wobei die Membran nach dem Imprägnieren auf 80 - 110°C erhitzt wird.

8. Verfahren nach jedem der Ansprüche 1-7, wobei die Membran nach dem Imprägnieren über einen Zeitraum von 2 - 10 Minuten erhitzt wird.

## Claims

1. A method for producing a permanently hydrophic filter membrane on the basis of aromatic polysulphone whereby the aromatic polysulphone creating the membrane is dissolved in a suitable solvent in accordance with a method known per se and then formed by coagulation of the polymer solution in a suitable precipitation bath as flat or capillary membrane with desired morphology, wherein the membrane thus obtained is led before or after the drying through an impregnating bath which contains as aqueous solution.
- 0.01 - 2 weight % polyvinylpyrrolidone and
0.01 - 2 weight % of a copolymer consisting of
5-80% monomer parts of vinyl-pyrrolidone and
95-20% monomer parts of one or more hydrophobic monomers,
- peroxodisulphate in the amount of 0.1 - 10 times the weight of PVP and copolymer used, and
- an alcohol with 1 to 4 C-atoms in such quantity that turbidity of the aqueous solution is barely prevented,
and that the membrane thus impregnated is heated to a temperature of 70-150°C over a period of 1-60 minutes and then cooled down to room temperature.

2. A method according to claim 1, wherein the membrane before the drying, is led over a period of 5-60 seconds through the impregnating bath.

3. A method according to claim 1, wherein the membrane is led after drying over a period of 2-10 seconds through the impregnating bath.

4. A method according to any of the claims 1 - 3 wherein vinylacetate is used as hydrophobic monomer.

5. Method according to any of the claims 1 - 4 wherein the peroxodisulphate in the form of its Na-and/or-K-and/or NH₄-salt is added.

6. A method according to any of the claims 1 - 5, wherein the peroxodisulphate in the 0.2 - 3 - times quantity of the total weight of PVP and copolymer is added.

7. A method according to any of the claims 1 - 6 wherein the membrane, after the impregnation is heated to 80-110°C.

8. A method according to any of the claims 1 - 7 wherein the membrane, after the impregnation is heated over a period of 2-10 minutes.

## Revendications

1. Procédé pour la préparation d'une membrane filtrante hydrophile permanente, à base de polysulfone aromatique, le polysulfone aromatique constituant la membrane est dissout selon un procédé connu en soi dans un solvant approprié et ensuite par coagulation de la solution de polymère dans un bain de précipitation approprié on forme une membrane plate ou capillaire ayant la morphologie voulue,
la membrane ainsi obtenue étant conduite avant ou après séchage à travers un bain d'imprégnation, lequel contient sous forme de solution aqueuse :
- 0,01 à 2% en poids de polyvinylpyrrolidone et 0,01 à 2% en poids d'un copolymère composé d'un taux de 5 à 80% de monomères de vinylpyrrolidone et d'un taux de 95 à 20% de monomères d'un ou plusieurs monomères hydrophobes,
- du peroxodisulfate dans une quantité de 0,1 à 10 fois en pourcentage la quantité en poids de PVP et de copolymère utilisé, et
- un alcool avec 1 à 4 atomes de carbone dans une quantité telle qu'on évite de justesse l'opacité de la solution aqueuse,
et en ce qu'on chauffe la membrane ainsi imprégnée en l'espace de 1 à 60 minutes, à une température de 70 à 150°C, et finalement on refroidit à la température ambiante.

2. Procédé selon la revendication 1, où la membrane avant séchage est conduite à travers le bain d'imprégnation en l'espace de 5 à 60 secondes.

3. Procédé selon la revendication 1, où la membrane après séchage est conduite à travers le bain d'imprégnation en l'espace de 2 à 10 secondes.

4. Procédé selon chacune des revendications 1 à 3, où on utilise l'acétate de vinyle en tant que monomère hydrophobe.

5. Procédé selon chacune des revendications 1 à 4, où on ajoute le peroxodisulfate sous forme de son sel de Na et/ou de K et/ou de NH₄.

6. Procédé selon chacune des revendications 1 à 5, où on ajoute le peroxodisulfate dans une quantité 0,2 à 3 fois la quantité du poids total du PVP et du copolymère.

7. Procédé selon chacune des revendications 1 à 6, où on chauffe la membrane après l'imprégnation à 80 à 110°C.

8. Procédé selon chacune des revendications 1 à 7,où on chauffe la membrane après l'imprégnation en l'espace de 2 à 10 minutes.
